# EUROPÄISCHE PATENTSCHRIFT

(11) **EP 2 951 373 B1**
(45) Veröffentlichungstag und Bekanntmachung des Hinweises auf die Patenterteilung: **21.06.2017**
(21) Anmeldenummer: 14706254.1
(22) Anmeldetag: 15.01.2014
(51) Int. Cl.: E05C 19/16

(54) **MÖBELBESCHLAG**
FURNITURE FITTING
FERRURE DE MEUBLE

(30) Priorität: 30.01.2013 AT 642013
(43) Veröffentlichungstag der Anmeldung: 09.12.2015
(73) Patentinhaber: Julius Blum GmbH, 6973 Höchst (AT)
(72) Erfinder: RÜCKER, Marco, A-6845 Hohenems (AT)
(74) Vertreter: Torggler & Hofinger Patentanwälte
(86) Internationale Anmeldenummer: PCT/AT2014/000007
(87) Internationale Veröffentlichungsnummer: WO 2014/117188

(56) Entgegenhaltungen:
- WO-A2-2012/128730
- DE-B4-102007 022 269
- DE-U1-202009 013 715

## Beschreibung

Die vorliegende Erfindung betrifft einen Möbelbeschlag mit den Merkmalen des Oberbegriffs des Anspruchs 1.

Gattungsgemäße Möbelbeschläge weisen einen Stößel auf, der durch eine Gewindeverbindung in seiner Länge einstellbar ist. Als Beispiel wären Touch-Latch-Einheiten zu nennen, die mithilfe eines vorgespannten Federelements zum Beispiel das Öffnen von Möbelteilen erlauben.

In der DE 10 2007 022 269 B4 ist ein gattungsgemäßer Möbelbeschlag offengelegt. Der aus zwei Stößelteilen bestehende Stößel darin ist zwar durch eine Gewindeverbindung in der Länge verstellbar. Wird aber ein Stößelteil so weit wie möglich herausgedreht, kann es vorkommen, dass das Innengewinde an dem einen Stößelteil nicht mehr mit dem Außengewinde an dem anderen Stößelteil zusammenwirkt. Obwohl ein Anschlag vorhanden ist, der das vollständige Lösen der beiden Stößelteile voneinander verhindert, erschwert dies die Bedienung. Denn zum Wiederherstellen der Gewindeverbindung muss immer erst das Innengewinde korrekt auf das Außengewinde aufgesetzt und aufgedreht werden, was dadurch erschwert wird, dass keines der beiden Gewinde für den Bediener sichtbar ist.

Zudem kann beispielsweise ein durch eine Bewegung erzeugtes Verkanten des äußeren Stößelteils mit dem Anschlag ein Wiederaufdrehen des Innengewindes auf das Außengewinde erschweren bzw. unmöglich machen. Des Weiteren wird durch die Möglichkeit des Lösens der Gewindeverbindung eine relativ komplexe Bauweise erzwungen. Darüber hinaus ist aus der DE 10 2007 022 269 B4 bekannt, der Stößel in der maximalen Einstellposition mittels der Anschlagverbindung im Gewindeeingriff zu halten.

In der WO 2012/128730 A2 ist ein Möbelbeschlag offengelegt, weilcher ebenfalls einen von einem ersten ein Innengewinde aufweisenden Stößelteil und einen zweiten Stößelteil umfasst, welcher ein mit dem Innengewinde zusammenwirkendes Außengewinde aufweist. Um zu verhindern, dass die beiden Stößelteile voneinander gelöst werden können, ist ein Arrester vorgesehen, welcher ausgehend vom ersten Stößelteil durch den zweiten Stößelteil bis zu dessen Ende hindurchragt, wo er eine Verbreiterung besitzt. Diese Verbreiterung verhindert das heraustreten des Arresters durch den zweiten Stößelteil. Diese komplexe Bauweise ist offensichtlich verbesserungsfähig. Insbesondere muss bei der Herstellung eines solchen Möbelbeschlags zuerst der Arrester im zweiten Stößelteil angeordnet werden bevor er mit dem ersten Stößelteil verbunden werden kann. Diese Verbindung ist aber nicht auf einfache Weise herzustellen, da die beiden Stößelteile den Zugang zur entsprechenden Stelle erschweren. In der DE 20 2009 013715 U1 ist ein Dämpfereinrichtung mit einem verstellbaren Stößel offengelegt, in welchem ein vollständiges Herausdrehen des Außengewindes aus dem Innengewinde durch ein Sicherungselement verhindert wird.

Aufgabe der vorliegenden Erfindung ist es einen Möbelbeschlag bereitzustellen, dessen in der Länge verstellbarer Stößel eine einfache Bauweise sowie eine einfache und sichere Bedienung aufweist.

Diese Aufgabe wird durch einen Möbelbeschlag mit den Merkmalen des Anspruchs 1 gelöst. Dies geschieht indem ein Sicherungselement vorgesehen ist, welches ein vollständiges Herausdrehen des Außengewindes aus dem Innengewinde verhindert. Mit anderen Worten wird das Einstellen der Länge des Stößels erleichtert, indem das Zusammenwirken von Außengewinde und Innengewinde zu jedem Zeitpunkt garantiert wird.

Es ist vorgesehen, dass das Sicherungselement an einer inneren Mantelfläche des ersten Stößelteils angeordnet ist, an welcher auch das Innengewinde angeordnet ist

Weitere Ausführungsformen der Erfindung sind in den abhängigen Ansprüchen definiert.

Eine besonders einfache Montage des Möbelbeschlags kann erreicht werden, indem das Sicherungselement als Einwegfederzunge ausgebildet ist, welche am ersten Stößelteil angeordnet ist.

Eine besonders sichere Verbindung zwischen den Stößelteilen kann erreicht werden, indem das Sicherungselement als einschiebbarer Riegel am ersten Stößelteil ausgebildet ist.

Bevorzugt ist eine Ausführungsform, bei der das Sicherungselement als Bund ausgebildet ist. Hierdurch kann die Fertigung des ersten Stößelteils sowie des Möbelbeschlags vereinfacht werden.

Hierbei kann es besonders effizient sein, wenn der Bund am ersten Stößelteil angeordnet ist und wenn ein Bunddurchmesser des Bundes kleiner als ein Außendurchmesser des Außengewindes ist.

Zur Verringerung von Reibung und aus optischen Gesichtspunkten kann es vorgesehen sein, dass ein Gewinde - vorzugsweise das Außengewinde - kürzer als das andere Gewinde - vorzugsweise das Innengewinde - ist

Desgleichen kann es für die Optik vorteilhaft sein, wenn der erste Stößelteil vom Gehäuse weg weist.

Für eine besonders kostengünstige Fertigung kann der erste Stößelteil, der zweite Stößelteil oder das Sicherungselement aus Kunststoff gefertigt sein.

Es kann außerdem der einfachen Fertigung zuträglich sein, dass der erste Stößelteil - vorzugsweise mit dem Sicherungselement - einstückig ausgeführt ist.

Besonders dann, wenn das erste Stößelteil über ein Spritzgießverfahren hergestellt wird, kann es vorgesehen sein, dass das erste Stößelteil über wenigstens ein Filmscharnier verfügt, wobei das Innengewinde vorliegt, wenn das wenigstens eine Filmscharnier geschlossen ist. Das erste Stößelteil kann dann in offenem Zustand spritzgegossen werden, wodurch die langen Zykluszeiten, die mit einem echten Gewindespritzen einhergehen, vermieden werden.

Um hierbei den Materialverbrauch so gering wie möglich zu halten, kann das wenigstens eine Filmscharnier in Richtung einer Längsachse des Innengewindes oder einer Querachse zur Längsachse des Innengewindes verlaufen.

Um besonders sanftes Schließen von beispielsweise Türen zu garantieren, kann der Möbelbeschlag als Dämpfereinheit mit beweglichem Stößel ausgeführt sein. Besonders bevorzugt ist dabei eine Ausführungsform, bei der die Dämpfereinheit als Lineardämpfer ausgebildet ist, welche vorzugsweise als Fluiddämpfereinheit mit einer Kolben-Zylinder-Einheit ausgeführt ist, in der ein Dämpferfluid - vorzugsweise Öl oder Luft - vorgesehen ist.

Prinzipiell denkbar sind aber auch den Möbelbeschlag als Federeinheiten oder Feder-Dämpfer-Kombinationen auszuführen.

Auch andere Anschlagdämpfer in Form einer Touch-Latch-Einheit sind besonders bevorzugt vorgesehen, da diese eine besonders angenehme Bedienung ermöglichen. Besonders in diesem Fall kann die "Latch"-Funktion besonders einfach implementiert werden, indem der Stößel über einen Magnet verfügt

Schutz begehrt wird auch für ein Möbel mit einem erfindungsgemäßen Möbelbeschlag.

Weitere Vorteile und Einzelheiten der Erfindung können den Figuren sowie den dazugehörigen Figurenbeschreibungen entnommen werden. Dabei zeigen:
Fig. 1a bis 1d Schnittdarstellungen, sowie perspektivische Darstellungen erfindungsgemäßer Touch-Latch-Einheiten,
Fig. 2a, 2b Schnittdarstellungen einer erfindungsgemäßen Dämpfereinheit,
Fig. 3a bis 3d verschiedene Darstellungen einer zweiten Ausführungsform eines erfindungsgemäßen ersten Stößelteils,
Fig. 4a bis 4f verschiedene Darstellungen einer dritten Ausführungsform eines erfindungsgemäßen ersten Stößelteils,
Fig. 5a bis 5d eine vierte Ausführungsform eines erfindungsgemäßen ersten Stößelteils,
Fig. 6a bis 6d eine Verdeutlichung der Montage eines ersten Stößelteils in der vierten Ausführungsform,
Fig. 7a bis 7e ein erstes Stößelteil in einer fünften Ausführungsform in verschiedenen Darstellungen,
Fig. 8a bis 8l verschiedene Darstellungen zur Montage eines ersten Stößelteils in der fünften Ausführungsform,
Fig. 9 eine Explosionsdarstellung einer Touch-Latch-Einheit aus Fig. 1 sowie
Fig. 10 ein Möbel mit einer erfindungsgemäßen Touch-Latch-Einheit.

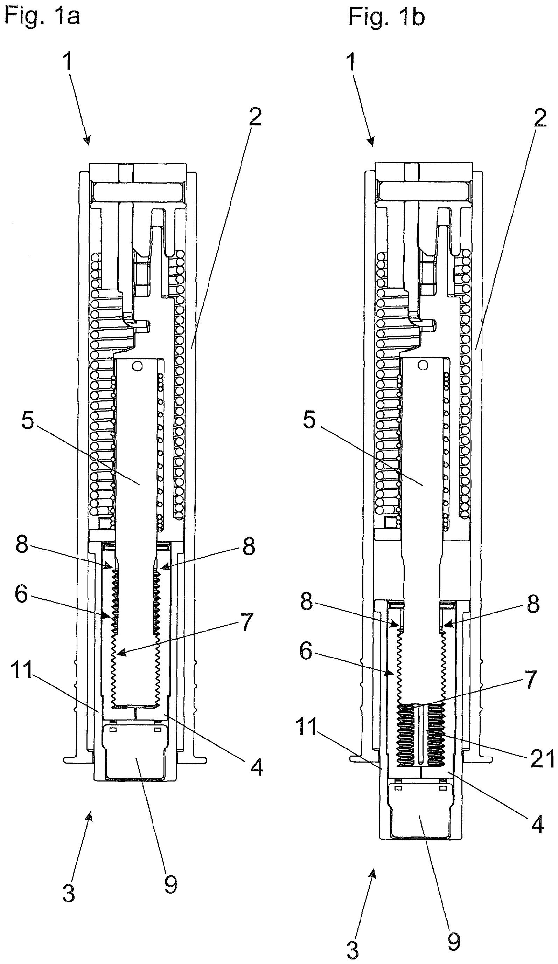

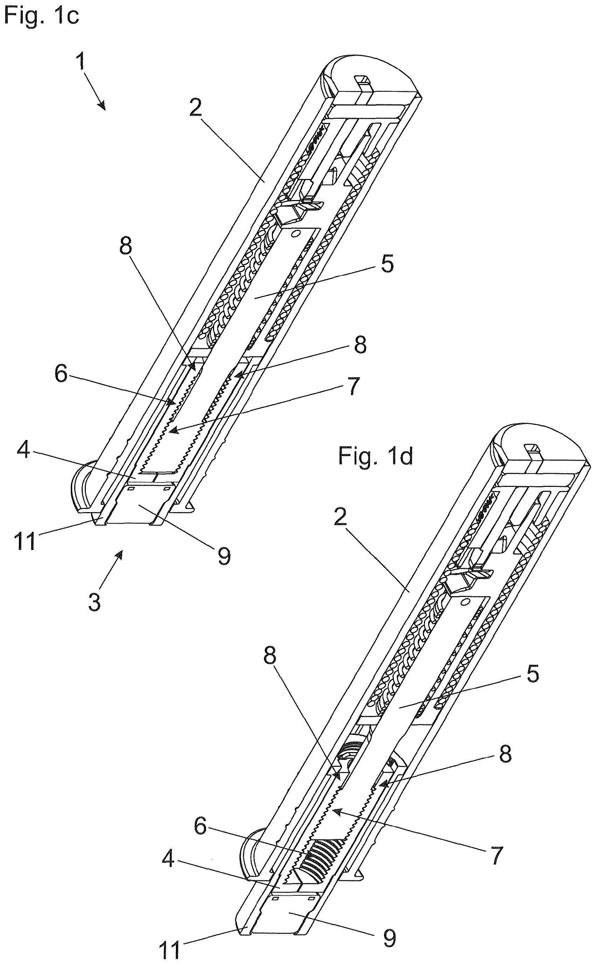

Fig. 1a und 1b sind Schnittdarstellungen einer erfindungsgemäßen Touch-Latch-Einheit. Dieser Möbelbeschlag 1 weist ein Gehäuse 2 sowie einen Stößel 3 auf. Der Stößel wiederum besteht aus einem ersten Stößelteil 4 und einem zweiten Stößelteil 5, welche durch ein Innengewinde 6 und ein damit zusammenwirkendes Außengewinde 7 zur Längeneinstellung des Stößels 3 miteinander verbunden sind. In Fig. 1 a ist der Stößel 3 in vollständig hineingedrehtem Zustand dargestellt. In Fig. 1b ist der erste Stößelteil 4 fast vollständig herausgedreht, wobei das Lösen der Gewindeverbindung von dem Sicherungselement 8 verhindert wird.

Zur Befestigung eines Magneten 9 und aus optischen Gründen befindet sich über dem ersten Stößelteil 4 eine Hülse 11.

Es folgen zwei perspektivische Darstellungen, wobei Fig. 1c Fig. 1a entspricht und Fig. 1d Fig. 1b entspricht. Hier und im Folgenden haben einander entsprechende Teile die gleichen Bezugszeichen.

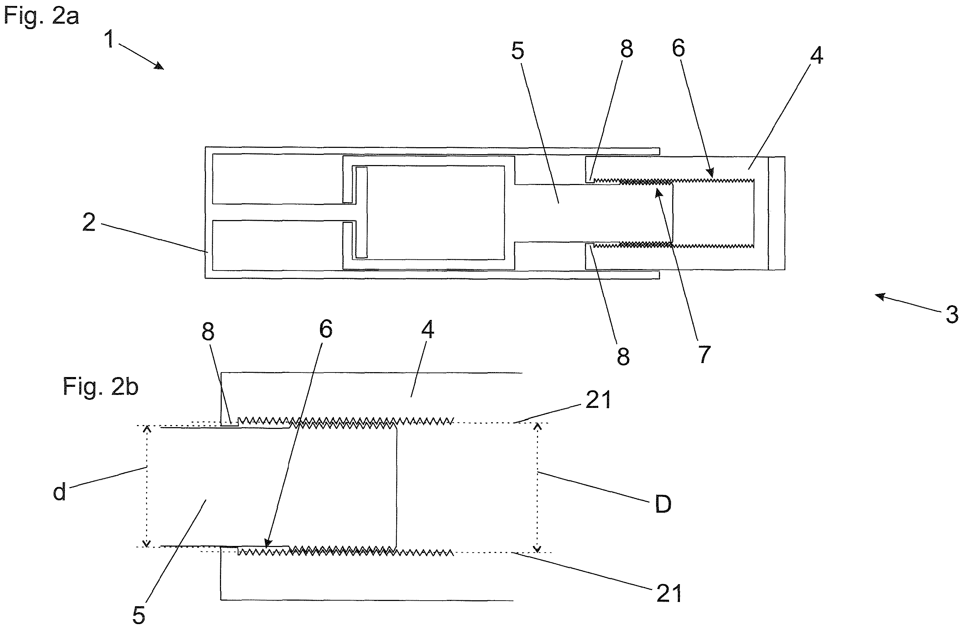

In Fig. 2a ist nun eine erfindungsgemäße Dämpfereinheit abgebildet, wobei das Sicherungselement 8 wieder als Bund am Ende des Innengewindes 7 ausgeführt ist. Insbesondere in der Detaildarstellung Fig. 2b ist zu erkennen, wie der Innendurchmesser d des Bundes kleiner als der Außendurchmesser D des Außengewindes ist, und dadurch das vollständige Herausdrehen des Außengewindes aus dem Innengewinde verhindert wird.

Bei allen in den Figuren dargestellten Ausführungsformen ist das Innengewinde 6 an der inneren Mantelfläche 21 des ersten Stößelteils 4 angeordnet. Ebenfalls ist allen Ausführungsformen gemein, dass das Sicherungselement 8 an der inneren Mantelfläche 21 angeordnet ist. In Figur 2b ist die innere Mantelfläche 21 durch gestrichelte Linien schematisch angedeutet.

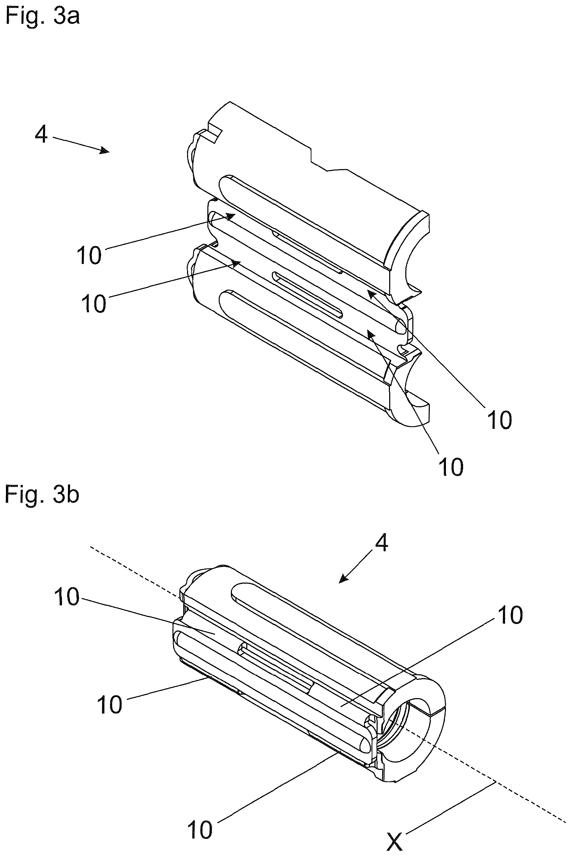

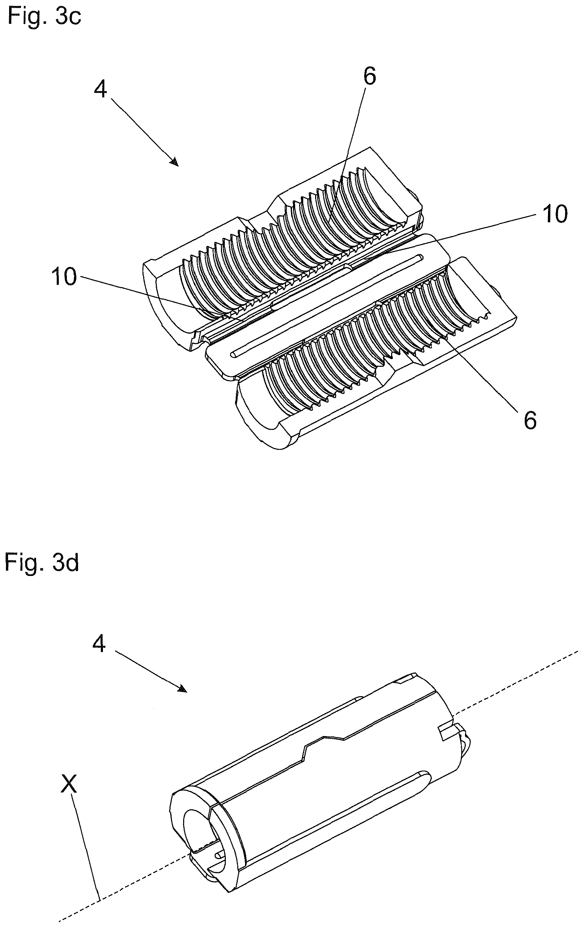

Die Figuren 3a bis 3d zeigen nun eine zweite Ausführungsform des ersten Stößelteils mit Filmscharnieren 10. Die Fig. 3a und 3b zeigen das erste Stößelteil in geöffneter Stellung des Filmscharniers, die Fig. 3b und 3d zeigen geschlossene Stellung eines Filmscharniers. In dieser Ausführungsform laufen die Filmscharniere parallel zu einer Längsachse X.

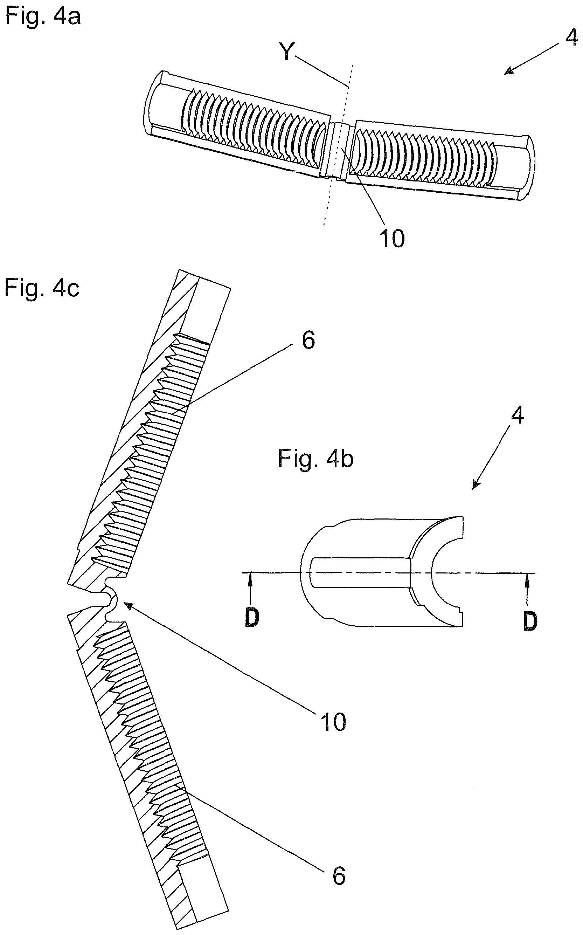

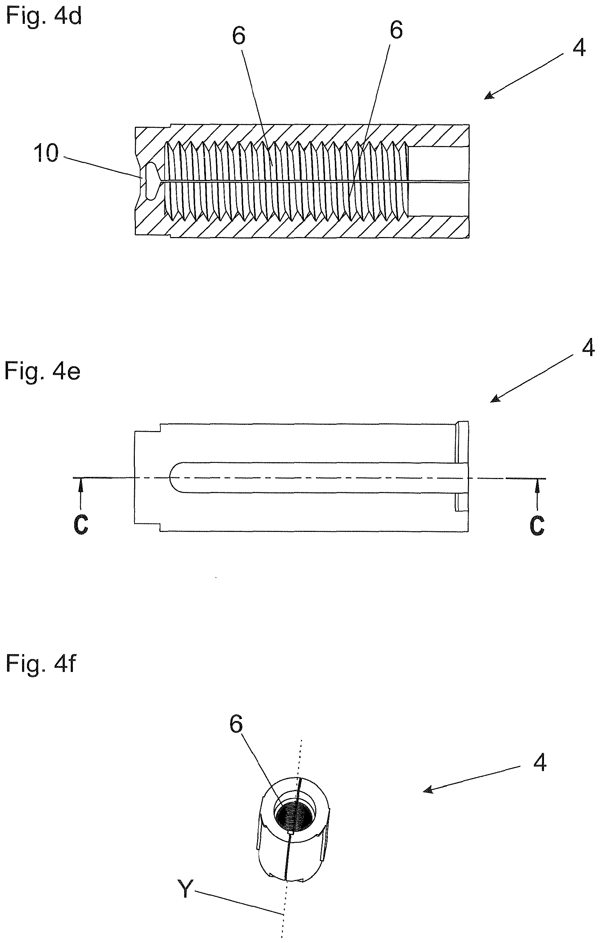

Die Fig. 4a bis 4f sind verschiedene Darstellungen einer dritten Ausführungsform eines ersten Stößelteils 4, bei der das Filmscharnier 10 entlang einer Querachse Y verläuft. Die Querachse Y ist quer zu einer gedachten Längsachse X. Hierbei ist Fig. 4c eine Schnittdarstellung in der Ebene D, welche in Fig. 4b erkennbar ist. Desgleichen ist Fig. 4d eine Schnittdarstellung durch die Ebene C, welche in Fig. 4e erkennbar ist.

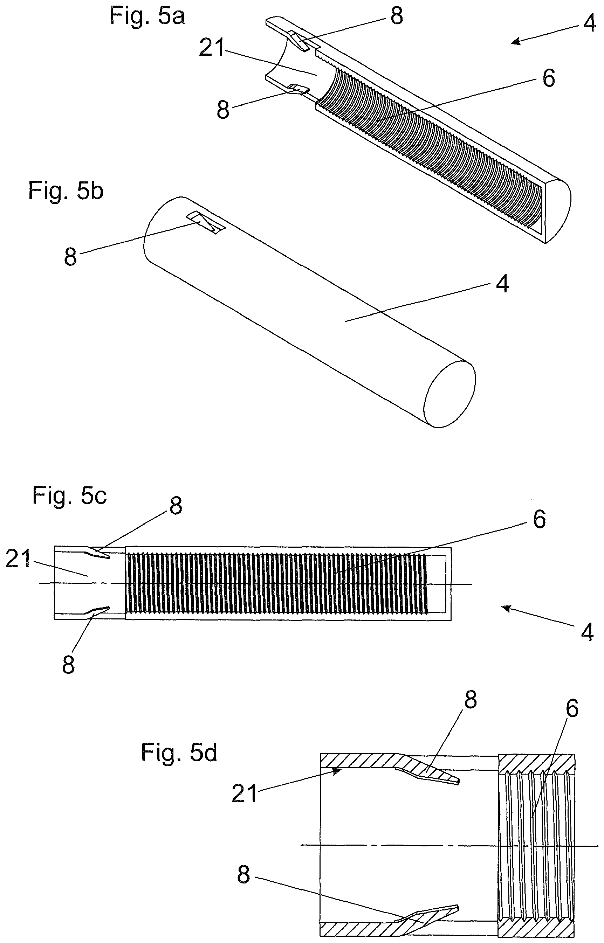

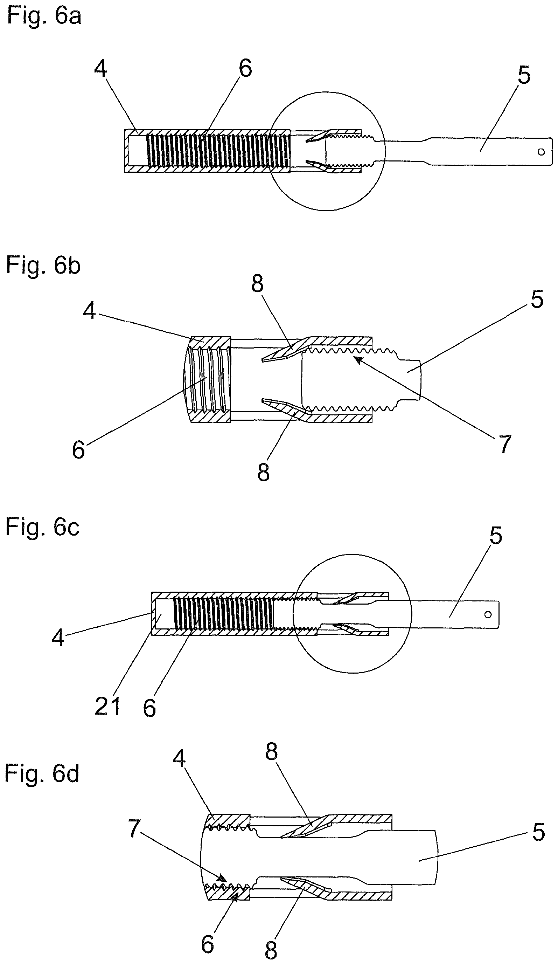

Die Fig. 5a bis 5d zeigen eine weitere Ausführungsform, bei der das Sicherungselement 8 als Einwegfederzunge ausgeführt ist. Fig. 5d ist hierbei eine vergrößerte Darstellung aus Fig. 5c. In den Fig. 6a bis 6d ist nun die Montage in dieser Ausführungsform dargestellt. Beim Hineinschrauben (siehe Fig. 6a sowie die Detaildarstellung Fig. 6b) wird die Einwegfederzunge zurückgebogen, bis das Außengewinde 7 am zweiten Stößelteil 5 passiert. Das Außengewinde 7 und das Innengewinde 6 stehen dann in Eingriff. Ein Lösen ist danach aber nicht mehr möglich, da die Einweg-Federzungen so gestaltet sind, dass sie bei einem vollständigen Herausdrehen nicht zurückfedern und daher diese Bewegung blockieren.

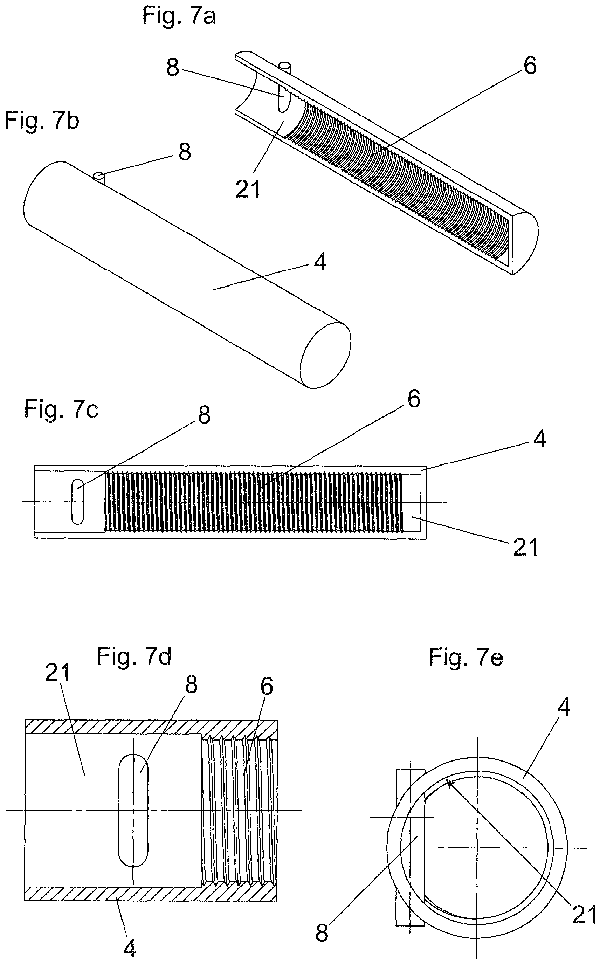

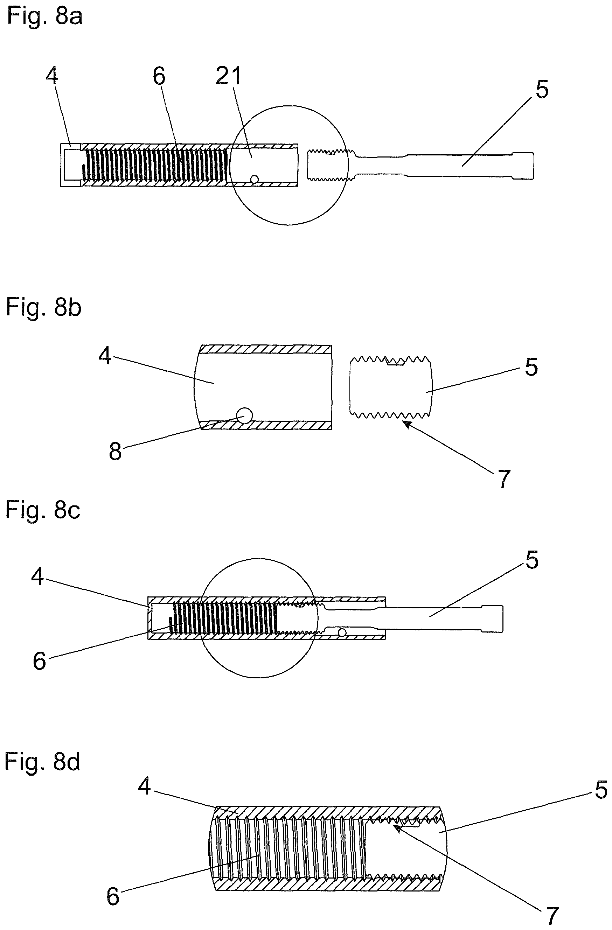

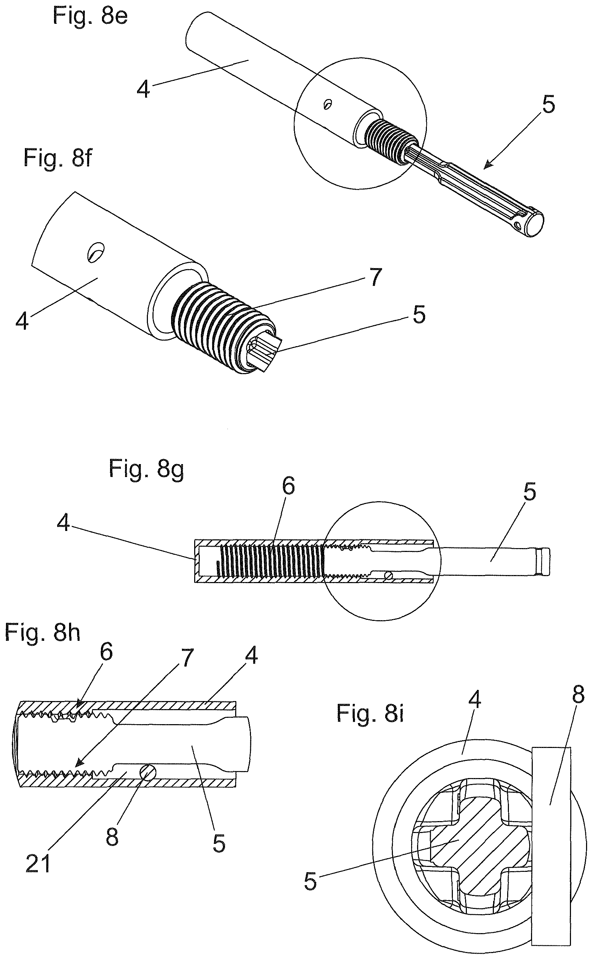

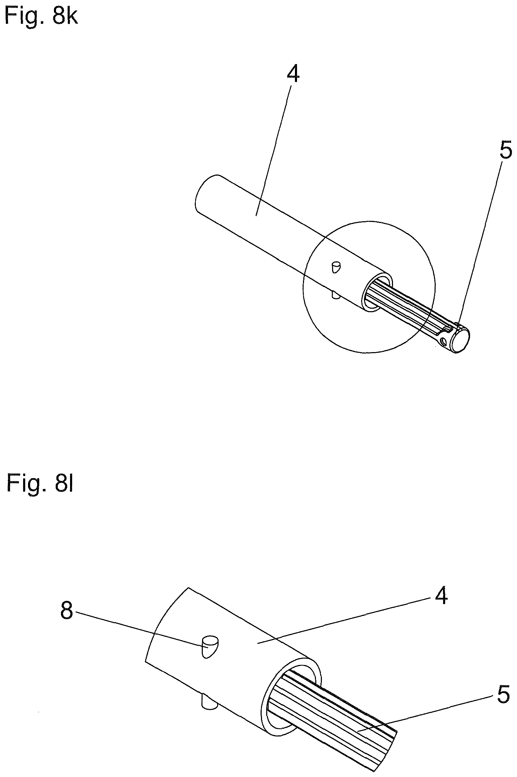

In den Fig. 7a bis 7e ist nun eine fünfte Ausführungsform des ersten Stößelteils gezeigt. Das Sicherungselement 8 ist hier als vorzuschiebender Riegel ausgebildet. Die Montage ist in den Fig. 8a bis 8l dargestellt. Es wird das erste Stößelteil mit dem zweiten Stößelteil zusammen gebracht, wobei der Riegel noch nicht eingeschoben ist. Nach dem Eindrehen des Außengewindes in das Innengewinde (Fig. 8a bis 8f) wird der Riegel eingeschoben (siehe insbesondere die Fig. 8k und 8l) und blockiert ein vollständiges Herausdrehen.

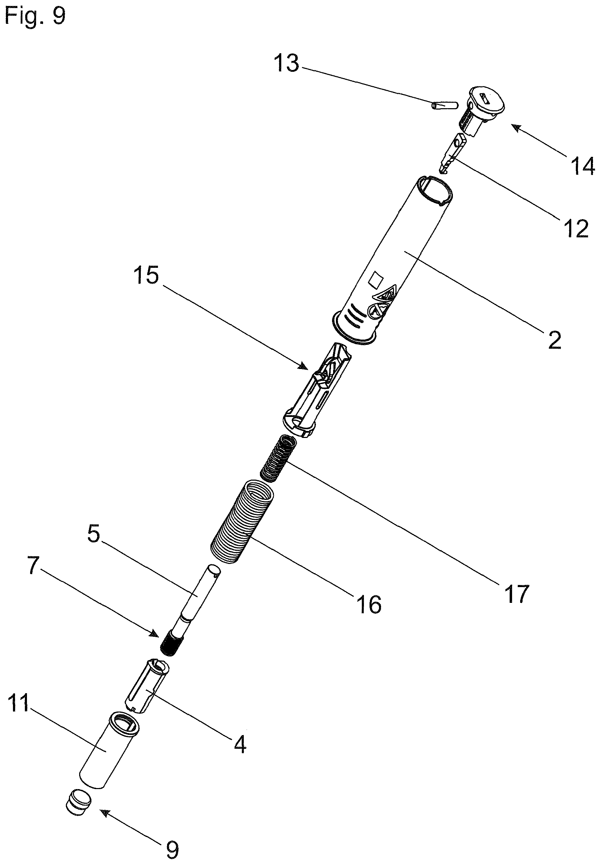

In der Explosionsdarstellung in Fig. 9 ist die aus den Fig. 1a bis 1d bekannte Touch-Latch-Einheit dargestellt. Neben den schon bekannten Teilen sind hier eine erste Feder 16, eine zweite Feder 17, ein Profilteil 15, ein Hebel 12 sowie ein Gehäuseverschluss 14, mit welchem der Hebel 12 durch einen Bolzen 13 verbunden ist, gezeigt. Die Touch-Latch-Funktion wird durch ein Vorspannen der ersten Feder 16 und den Eingriff des Hebels 12 in das Profil des Profilteils 15 implementiert. Ist die Touch-Latch-Einheit nun in der geschlossenen, vorgespannten Lage, wird durch die zweite Feder 17 verhindert, dass die Touch-Latch-Einheit auslöst, wenn nur mit geringer Kraft an dem Stößel gezogen wird. Insbesondere bei hartem Zuschlagen einer Möbeltür verhindert dies, dass sich die Tür wieder von selbst öffnet.

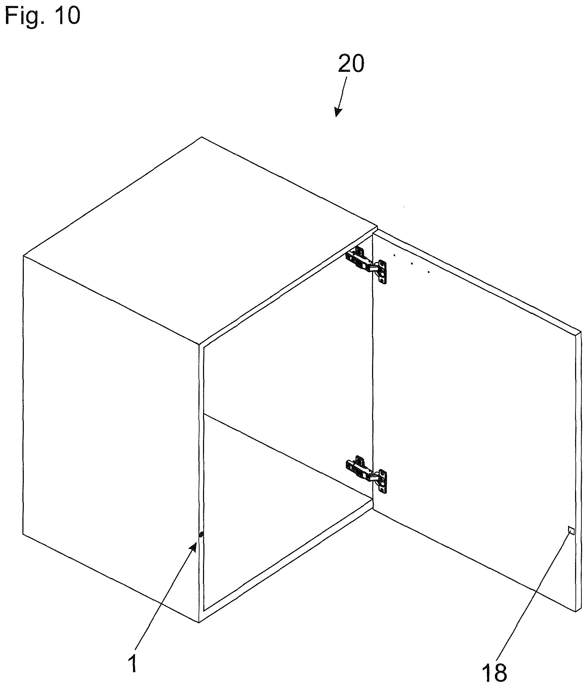

In Fig. 10 ist ein Möbel 20 mit einem erfindungsgemäßen Möbelbeschlag 1 dargestellt. Der Möbelbeschlag 1 ist hier als Touch-Latch-Einheit mit einem Magneten 9 ausgeführt. In der Tür des Möbels befindet sich ein Magnetgegenstück 18, welches mit dem Magneten 9 zusammenwirkt, und so die Zuhaltefunktion der Touch-Latch-Einheit realisiert.

Die Erfindung ist nicht auf die vorliegenden Ausführungsbeispiele beschränkt. Insbesondere kann ein erfindungsgemäßer Anschlagdämpfer auch für andere Türen, als die Türen eines Möbels, verwendet werden. Genauso ist es ohne weiteres möglich, dass sich das Innengewinde an dem Stößelteil, welches zum Gehäuse hinweist, befindet.

## Patentansprüche

1. Möbelbeschlag mit einem gegenüber einem Gehäuse (2) linear bewegbaren Stößel (3), welcher einen ersten Stößelteil (4) mit einem an einer inneren Mantelfläche (21) des ersten Stößelteils (4) angeordneten Innengewinde (6) und einen zweiten Stößelteil (5) mit einem mit dem Innengewinde (6) zusammenwirkenden Außengewinde (7) aufweist, wobei die Länge des Stößels durch Verdrehen des Außengewindes (7) relativ zum Innengewinde (6) einstellbar ist und ein Sicherungselement (8) vorgesehen ist, welches ein vollständiges Herausdrehen des Außengewindes (7) aus dem Innengewinde (6) verhindert, **dadurch gekennzeichnet, dass** das Sicherungselement (8) an der inneren Mantelfläche (21) des ersten Stößelteils (4) angeordnet ist.

2. Möbelbeschlag nach Anspruch 1, **dadurch gekennzeichnet, dass** das Sicherungselement (8) als Einwegfederzunge ausgebildet ist, welche am ersten Stößelteil (4) angeordnet ist.

3. Möbelbeschlag nach Anspruch 1, **dadurch gekennzeichnet, dass** das Sicherungselement (8) als einschiebbarer Riegel am ersten Stößelteil (4) ausgebildet ist.

4. Möbelbeschlag nach Anspruch 1, **dadurch gekennzeichnet, dass** das Sicherungselement (8) als Bund ausgebildet ist.

5. Möbelbeschlag nach Anspruch 4, **dadurch gekennzeichnet, dass** der Bund am ersten Stößelteil (4) angeordnet ist und dass ein Bunddurchmesser (d) des Bundes kleiner als ein Außendurchmesser (D) des Außengewindes (7) ist.

6. Möbelbeschlag nach wenigstens einem der Ansprüche 1 bis 5, **dadurch gekennzeichnet, dass** ein Gewinde - vorzugsweise das Außengewinde (7) - kürzer als das andere Gewinde - vorzugsweise das Innengewinde (6) - ist.

7. Möbelbeschlag nach wenigstens einem der Ansprüche 1 bis 6, **dadurch gekennzeichnet, dass** der erste Stößelteil (4) vom Gehäuse (2) weg weist.

8. Möbelbeschlag nach wenigstens einem der Ansprüche 1 bis 7, **dadurch gekennzeichnet, dass** der Stößel (3) über einen Magnet (9) verfügt.

9. Möbelbeschlag nach wenigstens einem der Ansprüche 1 bis 8, **dadurch gekennzeichnet, dass** der erste Stößelteil (4) und/oder der zweite Stößelteil (5) und/oder das Sicherungselement (8) aus Kunststoff gefertigt sind/ist.

10. Möbelbeschlag nach wenigstens einem der Ansprüche 1 bis 9, **dadurch gekennzeichnet, dass** der erste Stößelteil (4) - vorzugsweise mit dem Sicherungselement (8) - einstückig ausgeführt ist.

11. Möbelbeschlag nach wenigstens einem der Ansprüche 1 bis 10, **dadurch gekennzeichnet, dass** der erste Stößelteil (4) über wenigstens ein Filmscharnier (10) verfügt, wobei das Innengewinde (6) vorliegt, wenn das wenigstens eine Filmscharnier (10) geschlossen ist.

12. Möbelbeschlag nach wenigstens einem der Ansprüche 1 bis 11, **dadurch gekennzeichnet, dass** der Möbelbeschlag (1) als Dämpfereinheit mit beweglichem Stößel ausgeführt ist.

13. Möbelbeschlag nach Anspruch 12, **dadurch gekennzeichnet, dass** die Dämpfereinheit als Lineardämpfer ausgebildet ist, welche vorzugsweise als Fluiddämpfereinheit mit einer Kolben-Zylinder-Einheit ausgeführt ist, in der ein Dämpferfluid - vorzugsweise Öl oder Luft - vorgesehen ist.

14. Möbelbeschlag nach wenigstens einem der Ansprüche 1 bis 13, **dadurch gekennzeichnet, dass** der Möbelbeschlag (1) als Touch-Latch-Einheit ausgeführt ist.

15. Möbel mit einem Möbelbeschlag (1) nach wenigstens einem der Ansprüche 1 bis 14.

## Claims

1. A furniture fitting having a plunger (3), which can be moved linearly in relation to a housing (2) and which has a first plunger part (4) with an internal thread (6) arranged on an inner lateral surface (21) of the first plunger part (4) and a second plunger part (5) with an external thread (7), which interacts with the internal thread (6), wherein it is possible to adjust the length of the plunger by virtue of the external thread (7) being subjected to screwing action relative to the internal thread (6), and a securing element (8), which prevents the external thread (7) from being unscrewed all the way out of the internal thread (6), **characterized in that** the securing element (8) is arranged at the inner lateral surface (21) of the first plunger part (4).

2. The furniture fitting as claimed in claim 1, **characterized in that** the securing element (8) is designed in the form of a one-way resilient tongue, which is arranged on the first plunger part (4).

3. The furniture fitting as claimed in claim 1, **characterized in that** the securing element (8) is designed in the form of a push-in catch on the first plunger part (4).

4. The furniture fitting as claimed in claim 1, **characterized in that** the securing element (8) is designed in the form of a collar.

5. The furniture fitting as claimed in claim 4, **characterized in that** the collar is arranged on the first plunger part (4), and **in that** a diameter (d) of the collar is smaller than an external diameter (D) of the external thread (7).

6. The furniture fitting as claimed in at least one of claims 1 to 5, **characterized in that** one thread - preferably the external thread (7) - is shorter than the other thread - preferably the internal thread (6).

7. The furniture fitting as claimed in at least one of claims 1 to 6, **characterized in that** the first plunger part (4) is oriented away from the housing (2).

8. The furniture fitting as claimed in at least one of claims 1 to 7, **characterized in that** the plunger (3) has a magnet (9).

9. The furniture fitting as claimed in at least one of claims 1 to 8, **characterized in that** the first plunger part (4) and/or the second plunger part (5) and/or the securing element (8) are/is produced from plastics material.

10. The furniture fitting as claimed in at least one of claims 1 to 9, **characterized in that** the first plunger part (4) is formed in one piece - preferably with the securing element (8).

11. The furniture fitting as claimed in at least one of claims 1 to 10, **characterized in that** the first plunger part (4) has at least one film hinge (10), wherein the internal thread (6) is present when the at least one film hinge (10) is closed.

12. The furniture fitting as claimed in at least one of claims 1 to 11, **characterized in that** the furniture fitting (1) is configured in the form of a damper unit with a movable plunger.

13. The furniture fitting as claimed in claim 12, **characterized in that** the damper unit is designed in the form of a linear damper, which is configured preferably in the form of a fluid-damper unit with a piston/cylinder unit, in which a damper fluid - preferably oil or air - is provided.

14. The furniture fitting as claimed in at least one of claims 1 to 13, **characterized in that** the furniture fitting (1) is configured in the form of a touch-latch unit.

15. A piece of furniture having a furniture fitting (1) as claimed in at least one of claims 1 to 14.

## Revendications

1. Ferrure de meuble avec un poussoir (3) qui est mobile de manière linéaire par rapport à un boîtier (2), lequel poussoir (3) présente une première partie de poussoir (4) avec un filetage intérieur (6) disposé à une surface latérale (21) intérieure de la première partie de poussoir (4), et une deuxième partie de poussoir (5) comprenant un filetage extérieur (7) qui interagit avec le filetage intérieur (6), dans laquelle la longueur du poussoir peut être réglée par la torsion du filetage extérieur (7) par rapport au filetage intérieur (6) et dans laquelle un élément de blocage (8) est prévu, lequel empêche un dévissage intégral du filetage extérieur (7) hors du filetage intérieur (6), **caractérisée en ce que** l'élément de blocage (8) est disposé à la surface latérale (21) intérieure de la première partie de poussoir (4).

2. Ferrure de meuble selon la revendication 1, **caractérisée en ce que** l'élément de blocage (8) est conçu sous la forme d'une languette de ressort à sens unique, laquelle est disposée à la première partie de poussoir (4).

3. Ferrure de meuble selon la revendication 1, **caractérisée en ce que** l'élément de blocage (8) est conçu sous la forme d'un verrou, pouvant être glissé, à la première partie de poussoir (4).

4. Ferrure de meuble selon la revendication 1, **caractérisée en ce que** l'élément de blocage (8) est conçu sous la forme d'une collerette.

5. Ferrure de meuble selon la revendication 4, **caractérisée en ce que** la collerette est disposée à la première partie de poussoir (4) et **caractérisée en ce qu'**un diamètre de collerette (d) de la collerette est inférieur à un diamètre extérieur (D) du filetage extérieur (7).

6. Ferrure de meuble selon au moins l'une des revendications 1 à 5, **caractérisée en ce qu'**un filetage, de préférence le filetage extérieur (7), est plus petit que l'autre filetage, de préférence le filetage intérieur (6).

7. Ferrure de meuble selon au moins l'une des revendications 1 à 6, **caractérisée en ce que** la première partie de poussoir (4) est orientée à l'opposé du boîtier (2).

8. Ferrure de meuble selon au moins l'une des revendications 1 à 7, **caractérisée en ce que** le poussoir (3) dispose d'un aimant (9).

9. Ferrure de meuble selon au moins l'une des revendications 1 à 8, **caractérisée en ce que** la première partie de poussoir (4) et/ou la deuxième partie de poussoir (5) et/ou l'élément de blocage (8) est ou sont fabriqué(s) en plastique.

10. Ferrure de meuble selon au moins l'une des revendications 1 à 9, **caractérisée en ce que** la première partie de poussoir (4) est réalisée d'une seule pièce, de préférence avec l'élément de blocage (8).

11. Ferrure de meuble selon au moins l'une des revendications 1 à 10, **caractérisée en ce que** la première partie de poussoir (4) dispose d'au moins une charnière à film (10), selon laquelle le filetage intérieur (6) est apparent quand l'au moins une charnière à film (10) est fermée.

12. Ferrure de meuble selon au moins l'une des revendications 1 à 11, **caractérisée en ce que** la ferrure de meuble (1) est réalisée sous la forme d'une unité d'amortissement comprenant un poussoir mobile.

13. Ferrure de meuble selon la revendication 12, **caractérisée en ce que** l'unité d'amortissement est conçue sous la forme d'un amortisseur linéaire, lequel est, de préférence, réalisé sous la forme d'une unité d'amortissement au moyen d'un fluide, comprenant une unité à piston et à cylindre et dans laquelle est prévu un fluide d'amortissement, contenant de préférence de l'huile ou de l'air.

14. Ferrure de meuble selon au moins l'une des revendications 1 à 13, **caractérisée en ce que** la ferrure de meuble (1) est réalisée sous la forme d'une unité à fermoir par contact de type « touch-latch ».

15. Meuble comprenant une ferrure de meuble (1) selon au moins l'une des revendications 1 à 14.
